# EUROPÄISCHE PATENTSCHRIFT

(11) **EP 3 752 335 B1**
(45) Veröffentlichungstag und Bekanntmachung des Hinweises auf die Patenterteilung: **22.01.2025**
(21) Anmeldenummer: 19703357.4
(22) Anmeldetag: 12.02.2019
(51) Int. Cl.: B29C 45/73, B29C 33/04

(54) **VORRICHTUNG UND VERFAHREN ZUM KÜHLEN EINER GUSSFORM**
DEVICE AND METHOD FOR COOLING A CASTING MOULD
DISPOSITIF ET PROCÉDÉ DE REFROIDISSEMENT D'UNE MOULE DE COULÉE

(30) Priorität: 13.02.2018 EP 18156455
(43) Veröffentlichungstag der Anmeldung: 23.12.2020
(73) Patentinhaber: G.A. Röders Holding GmbH & Co. KG, 29614 Soltau (DE)
(72) Erfinder: RÖDERS, Andreas, 29614 Soltau (DE)
(74) Vertreter: Glawe, Delfs, Moll
(86) Internationale Anmeldenummer: PCT/EP2019/053425
(87) Internationale Veröffentlichungsnummer: WO 2019/158521

(56) Entgegenhaltungen:
- EP-A1- 2 796 268
- WO-A2-2005/123357
- DE-A1- 1 758 140
- DE-A1- 102008 000 452
- DE-A1- 3 322 312
- DE-B3- 102008 062 433
- IP COM ET AL: "04/05/2020 Evaporative cooling of injection mold inserts ? What can I type? Search using keywords with optional Boolean syntax Keyword Search Concept Search ? Add Date Range Browse Prior Art Database Quick Links Click to Preview Evaporative cooling of injection mold insertsCOM DISCLOSURE NUMBER: IPC", 1 January 2020 (2020-01-01), XP055691205, Retrieved from the Internet <URL:https://ip.com/>
- THEINEL P ET AL: "KUERZERE HUEHLZEITEN", PLASTVERARBEITER, HUETHIG GMBH, HEIDELBERG, DE, vol. 56, no. 8, 1 August 2005 (2005-08-01), pages 78/79, XP001246842, ISSN: 0032-1338
- ANONYMOUS: "Evaporative cooling of injection mold inserts", IP.COM JOURNAL, IP.COM INC., WEST HENRIETTA, NY, US, 15 May 2002 (2002-05-15), XP013003082, ISSN: 1533-0001

## Beschreibung

Die Erfindung betrifft eine Vorrichtung zum Kühlen einer Gussform. Die Vorrichtung umfasst eine in der Gussform ausgebildete Verdampfungskammer. Mit einer ersten Pumpe wird der Verdampfungskammer eine Flüssigkeit zugeführt.

Beim Herstellen von Gussteilen wird ein Gussmaterial in flüssigem Zustand einem Formhohlraum einer Gussform zugeführt. In dem Formhohlraum kühlt das Gussmaterial ab und geht in einen festen Zustand über. Es entsteht ein Gussteil, das eine dem Formhohlraum entsprechende Form hat. Die Gussform kann geöffnet werden, um das Gussteil aus der Form zu entnehmen.

Um den Prozess der Abkühlung gezielt beeinflussen zu können, ist es bekannt, in bestimmten Bereichen des Gussformgehäuses eine Verdampfungskammer auszubilden. Eine Flüssigkeit, die unter hohem Druck zu der Verdampfungskammer geleitet wird, kann in der Verdampfungskammer entspannen, wodurch die Flüssigkeit verdampft. Die zum Verdampfen erforderliche Wärmemenge wird dem Gussformgehäuse und indirekt dem Gussmaterial in dem Formhohlraum entzogen, wodurch das Gussmaterial in diesem Abschnitt der Gussform gezielt gekühlt werden kann. Dieses Verfahren zum Kühlen einer Gussform wird auch als Jet-Cooling bezeichnet.

Wenn der Gussform durch Verdampfen einer Flüssigkeit Wärme entzogen wird, so hat dies den Vorteil, dass sich aufgrund der konstanten Verdampfungstemperatur eine definierte Temperatur im Umfeld der Verdampfungskammer einstellt. Wird beispielsweise Wasser bei Atmosphärendruck verdampft, so liegt die Temperatur im Wesentlichen konstant bei etwa 100 °C.

Die Patentschrift EP 2 796 268 A1 stellt eine Vorrichtung zur Temperierung einer Werkzeugform vor, wobei ein Temperierfluidkreislauf zur Kühlung der Werkzeugform mittels Unterdruck-Siedekühlung eingerichtet ist. Die Offenlegungsschrift DE 1 758 140 A1 behandelt ein Verfahren und eine Vorrichtung zum Temperieren von Formwerzeugen, wobei eine Umlaufflüssigkeit durch ein regelbares Vakuum teilweise verdampft wird. In WO 2005/123357 A2 ist ein Verfahren zum Kontrollieren der Temperatur einer Gussform offenbart.

Der Erfindung liegt die Aufgabe zugrunde, eine Vorrichtung und ein Verfahren zum Kühlen einer Gussform vorzustellen, mit denen der Abkühlvorgang gezielt beeinflusst werden kann. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Die erfindungsgemäße Vorrichtung wird in Anspruch 1 und das erfindungsgemäße Verfahren in Anspruch 10 definiert. In den abhängigen Ansprüchen sind optionale Merkmale angegeben.

Bei der erfindungsgemäßen Vorrichtung ist eine zweite Pumpe vorgesehen, um in der Verdampfungskammer einen von Atmosphärendruck abweichenden Druck anzulegen. Durch Einstellen des Drucks in der Verdampfungskammer kann die Temperatur beeinflusst werden, bei der die Flüssigkeit verdampft. Durch Erhöhen des Drucks in der Verdampfungskammer kann die Verdampfungstemperatur erhöht werden, durch Vermindern des Drucks in der Verdampfungskammer kann die Verdampfungstemperatur vermindert werden. Mit einer reduzierten Verdampfungstemperatur kann der Abkühlvorgang beschleunigt werden, was genutzt werden kann, um die Taktzeit beim Herstellen von Gussteilen zu verkürzen. Mit einer erhöhten Verdampfungstemperatur kann der Abkühlvorgang verlangsamt werden, wodurch sich bei bestimmten Gussteilen eine höhere Oberflächenqualität oder eine verbesserte Struktur des Materials erreichen lässt.

Die Erfindung hat erkannt, dass es von Vorteil ist, die der Verdampfungskammer zugeführte Flüssigkeit mit der ersten Pumpe unter Druck zu stellen. Die erfindungsgemäße Kühlvorrichtung umfasst eine Zuleitung, die sich zu der Verdampfungskammer erstreckt. Um eine gezielte Kühlung zu ermöglichen, ist es von Vorteil, wenn die Flüssigkeit nicht in der Zuleitung verdampft, sondern erst beim Austritt der Flüssigkeit aus der Zuleitung in die Verdampfungskammer. Dies kann erreicht werden, indem die Flüssigkeit in der Zuleitung unter einem erhöhten Druck gesetzt wird. Der Druck, unter dem die Flüssigkeit in der Zuleitung steht ist deswegen erfindungsgemäß höher als der Druck in der Verdampfungskammer.

Ein zu der Verdampfungskammer benachbarter Abschnitt der Zuleitung kann einen Durchmesser haben, der kleiner ist als der Durchmesser der Zuleitung in einem von der Verdampfungskammer weiter entfernten Abschnitt. Der zu der Verdampfungskammer benachbarte Abschnitt der Zuleitung stellt eine lokale Verengung in der Zuleitung dar und kann in der Verdampfungskammer münden. Im Betrieb der erfindungsgemäßen Vorrichtung kann über der lokalen Verengung eine Druckdifferenz anliegen. Die Druckdifferenz über der lokalen Verengung kann wenigstens 2%, vorzugsweise wenigstens 5%, weiter vorzugsweise wenigstens 10% der Gesamtdruckdifferenz ausmachen, die zwischen dem Ausgang der ersten Pumpe und dem Eingang der zweiten Pumpe anliegt. Der Weg, entlang dem die Druckdifferenz betrachtet wird, erstreckt sich von der ersten Pumpe über die lokale Verengung und die Verdampfungskammer zu der zweiten Pumpe. Vorzugsweise liegt die Druckdifferenz über der lokalen Verengung zwischen 30% und 90% der Gesamtdruckdifferenz. Hierdurch kann erreicht werden, dass die Flüssigkeit in der Zuleitung bis zu der Verengung einen so hohen Druck beibehält, dass sie nicht verdunstet. Die Zuleitung kann in dem die lokale Verengung bildenden, zu der Verdampfungskammer benachbarten Abschnitt einen Durchmesser zwischen 0,5 mm und 2 mm, vorzugsweise zwischen 0,8 mm und 1,2 mm haben. Dies bezieht sich auf eine Zuleitung mit kreisförmigen Querschnitt. Bei Zuleitungen mit anderem Querschnitt kann die Querschnittsfläche entsprechend sein.

Um ein Verdampfen der Flüssigkeit in der Zuleitung auch dann zu verhindern, wenn die Temperatur der Zuleitung deutlich oberhalb der Verdampfungstemperatur in der Verdampfungskammer liegt, kann die Flüssigkeit in der Zuleitung unter einem entsprechend hohen Druck stehen. Erfindungsgemäß ist der Druck in der Zuleitung um wenigstens 5 bar, vorzugsweise um wenigstens 10 bar, weiter vorzugsweise um wenigstens 20 bar höher als der Druck in der Verdampfungskammer. Die erste Pumpe der erfindungsgemäßen Vorrichtung kann eine Flüssigkeitspumpe sein, die geeignet ist, die Flüssigkeit mit einem solchen Druck durch die Zuleitung zu fördern.

Die erfindungsgemäße Vorrichtung umfasst eine Ableitung, durch die Reste der Flüssigkeit in verdampftem oder flüssigem Zustand aus der Verdampfungskammer abgeführt werden können. Um zu vermeiden, dass es beim Verdampfen der Flüssigkeit zu einem starken Druckanstieg in der Verdampfungskammer kommt, kann die Ableitung einen größeren Querschnitt haben als die Zuleitung.

Die zweite Pumpe, mit der gemäß der Erfindung der Druck in der Verdampfungskammer eingestellt wird, ist an die Ableitung angeschlossen. Dies bedeutet, dass der von der zweiten Pumpe aufgebaute Druck über die Ableitung oder über einen Abschnitt der Ableitung zu der Verdampfungskammer übertragen wird.

Die erfindungsgemäße Vorrichtung kann an einem Kondensator angeschlossen sein, in dem verdampfte Flüssigkeitsmengen aus der Verdampfungskammer wieder kondensiert werden. Der Kondensator kann einen Wärmetauscher umfassen, mit dem überschüssige Wärme abgeführt wird. Als Kühlmedium für den Kondensator kann beispielsweise Wasser verwendet werden.

Der Kondensator kann einen Behälter umfassen, dessen unterer Bereich mit Flüssigkeit gefüllt ist. Die erste Pumpe kann an den unteren Bereich des Behälters angeschlossen sein. Wenn die erste Pumpe in Betrieb ist, wird Flüssigkeit aus dem unteren Bereich des Behälters angesaugt und durch die Zuleitung zu der Verdampfungskammer gefördert.

Die zweite Pumpe, mit der der gewünschte Druck in der Verdampfungskammer erzeugt wird, kann oberhalb des Flüssigkeitspegels an den Behälter des Kondensators angeschlossen sein. Ein von der zweiten Pumpe erzeugter Unterdruck oder Überdruck wird durch den Behälter des Kondensators und die Ableitung zu der Verdampfungskammer übertragen. Zwischen der zweiten Pumpe und der Verdampfungskammer kann ein Druckspeicher angeordnet sein, so dass der gewünschte Druck in der Verdampfungskammer auch dann aufrechterhalten werden kann, wenn die zweite Pumpe nicht in Betrieb ist.

Mit der Ableitung kann ein Ventil verbunden sein, das im geöffneten Zustand eine Verbindung zwischen der Ableitung und Atmosphärendruck herstellt. Bei geöffnetem Ventil findet ein Druckausgleich zwischen der Ableitung und der Umgebung statt, so dass sich in der Ableitung Atmosphärendruck einstellt. Es kann zweckmäßig sein, zwischen zwei Zyklen, in denen in der Verdampfungskammer zum Zwecke der Kühlungsflüssigkeit verdampft wird, einen Ausgleich auf Atmosphärendruck durchzuführen, um ein Verdampfen von Flüssigkeitsmengen während solcher Phasen zu unterbinden, in denen keine Kühlwirkung gewünscht ist.

Das Ventil kann an einer geeigneten Stelle zwischen der Verdampfungskammer und der zweiten Pumpe angeordnet sein, beispielsweise an der Ableitung, an dem Kondensator oder an dem Druckspeicher.

Die erfindungsgemäße Kühlvorrichtung kann mit einem Gasanschluss ausgestattet sein, über den ein Gas, insbesondere Luft, in die Verdampfungskammer eingelassen werden kann, um Flüssigkeitsreste aus der Verdampfungskammer auszublasen. Das Entfernen von Flüssigkeitsresten aus der Verdampfungskammer kann durchgeführt werden, um für den nächsten Kühlvorgang eine definierte Ausgangssituation zu schaffen, in der die Verdampfungskammer ausschließlich mit Gas gefüllt ist. Der Gasanschluss kann beispielsweise direkt an der Verdampfungskammer oder an einem Abschnitt der Zuleitung angeschlossen sein.

Ist der Gasanschluss geöffnet, so kann das Gas unter dem Einfluss einer Druckdifferenz in die Verdampfungskammer eintreten. Liegt in der Verdampfungskammer ein Unterdruck an, so kann die Druckdifferenz gegenüber Atmosphärendruck ausreichen, um das Gas anzutreiben. Möglich ist auch, dass das Gas unter einem Überdruck gegenüber Atmosphärendruck in den Gasanschluss eingeleitet wird. Die Flüssigkeitszufuhr durch die Zuleitung ist vorzugsweise unterbrochen, während Gas in die Verdampfungskammer eintritt.

Die zweite Pumpe ist in einer Ausführungsform eine Vakuumpumpe, die dazu ausgelegt ist, in der Verdampfungskammer einen Druck anzulegen, der kleiner ist als Atmosphärendruck. Der absolute Druck in der Verdampfungskammer, wenn die zweite Pumpe in Betrieb ist, kann beispielsweise zwischen 50 mbar und 800 mbar, vorzugsweise zwischen 100 mbar und 500 mbar liegen. Wird der Druck in der Verdampfungskammer auf beispielsweise 200 mbar reduziert, so verdampft das Wasser bereits bei 70 °C.

Die Verwendung einer Vakuumpumpe ist zweckmäßig, wenn der Abkühlvorgang durch die Erfindung beschleunigt werden soll.

Die Verwendung einer Vakuumpumpe als zweite Pumpe ist außerdem zweckmäßig, wenn der Gussvorgang bei Werkzeugtemperaturen unterhalb von 100 °C erfolgt. Durch Verdampfen von Wasser bei Atmosphärendruck kann dann keine Kühlwirkung erzielt werden. Mit Werkzeugtemperaturen unterhalb von 100 °C wird beispielsweise beim Spritzgießen bestimmter Kunststoffe gearbeitet, wie etwa Polyoxymethylen (POM), Polyamid (PA) oder Polybutylenterephthalat (PBT).

In einer anderen Ausführungsform ist die zweite Pumpe eine Überdruckpumpe, die dazu ausgelegt ist, in der Verdampfungskammer einen Druck anzulegen, der größer ist als Atmosphärendruck. Der absolute Druck in der Verdampfungskammer, wenn die zweite Pumpe in Betrieb ist, kann beispielsweise zwischen 5 bar und 15 bar liegen. Die Verwendung einer Überdruckpumpe als zweite Pumpe kann zweckmäßig sein, wenn der Abkühlvorgang durch die Erfindung verlangsamt werden soll.

Wird mit Werkzeugtemperaturen deutlich oberhalb von 100 °C gearbeitet, so wird die Gussform lokal sehr stark gekühlt, wenn in der Verdampfungskammer Wasser bei Atmosphärendruck verdampft wird. Eine solche starke lokale Kühlung kann unerwünschte Effekte auf die Struktur des Materials in der Gussform haben oder zu einer verminderten Oberflächenqualität führen. Bei einer Erhöhung des absoluten Drucks in der Verdampfungskammer auf einen Wert von beispielsweise 10 bar, verdampft das Wasser erst bei einer Temperatur von etwa 200 °C. Das Material in der Gussform kann auf diese Weise einer weniger abrupten Abkühlung ausgesetzt werden. Ein verlangsamter Abkühlvorgang kann beispielsweise beim Spritzgießen bestimmter Kunststoffe gewünscht sein. Beispiele für solche Kunststoffe sind Polyacrylsäure (PAA), Polyphthalamide (PPA) oder Polyphenylensulfid (PPS).

Die erfindungsgemäße Kühlvorrichtung kann so gestaltet sein, dass sie eine Vakuumpumpe und eine Überdruckpumpe umfasst. Es kann ein Umschalter vorgesehen sein, um zwischen der Vakuumpumpe und der Überdruckpumpe umzuschalten, so dass je nach gewünschter Kühltemperatur in der Verdampfungskammer zwischen der Vakuumpumpe und der Überdruckpumpe umgeschaltet werden kann.

Die Gussform der erfindungsgemäßen Vorrichtung kann eine Mehrzahl von Verdampfungskammern umfassen. Den Verdampfungskammern kann synchron miteinander oder unabhängig voneinander Flüssigkeit zum Verdampfen zugeführt werden.

Die erste Pumpe und die zweite Pumpe der erfindungsgemäßen Vorrichtung können als separate bauliche Einheiten ausgebildet sein. Möglich ist auch, dass es sich bei der ersten Pumpe und der zweiten Pumpe um funktionale Elemente innerhalb einer einzelnen Pumpeneinheit handelt.

Die Erfindung betrifft außerdem eine Kunststoff-Spritzgussmaschine, bei der eine Spritzgussform mit einer solchen Vorrichtung gekühlt wird.

Die Erfindung betrifft außerdem ein Verfahren zum Kühlen einer Gussform, bei dem eine Flüssigkeit zu einer in der Gussform ausgebildeten Verdampfungskammer zugeführt wird, um die Flüssigkeit in der Verdampfungskammer zu verdampfen. Bei dem Verfahren wird in der Verdampfungskammer ein von Atmosphärendruck abweichender Druck angelegt. Dabei wird die Flüssigkeit in der Zuleitung unter einen erhöhten Druck gesetzt, sodass die Flüssigkeit nicht in der Zuleitung verdampft. Die Erfindung betrifft außerdem ein Verfahren zum Herstellen eines Kunststoff-Spritzgussteils, bei dem eine Spritzgussform nach diesem Verfahren gekühlt wird.

Das Verfahren kann mit weiteren Merkmalen fortgebildet werden, die im Zusammenhang der erfindungsgemäßen Vorrichtung beschrieben sind. Die Vorrichtung kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Kunststoff-Spritzgussmaschine;
- Fig. 2:: ein Detail aus Fig. 1 in vergrößerter Darstellung;
- Fig. 3:: eine schematische Darstellung einer erfindungsgemäßen Vorrichtung zum Kühlen der Gussform.

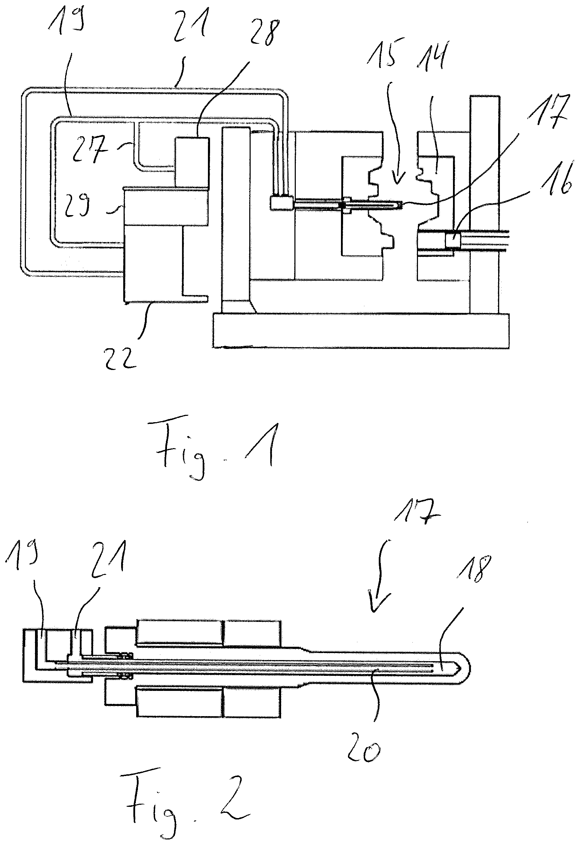

Eine in Fig. 1 gezeigte Kunststoff-Spritzgussmaschine umfasst eine Spritzgussform 14, in der ein Formhohlraum 15 ausgebildet ist. Die Spritzgussform 14 ist im geöffneten Zustand gezeigt, in dem zwei Hälften der Spritzgussform 14 voneinander beabstandet sind. Im geöffneten Zustand kann ein Spritzgussteil aus dem Formhohlraum 15 der Spritzgussform 14 entnommen werden.

Für den nächsten Spritzgussvorgang wird die Spritzgussform 14 in einen geschlossenen Zustand gebracht, in dem die beiden Hälften der Spritzgussform 14 dicht miteinander abschließen. Durch eine Vorwärts-Bewegung einer Kolbenschnecke 16 wird ein Kunststoffmaterial in flüssigem Zustand in den Formhohlraum 15 eingebracht. Es wird gewartet, bis das Kunststoffmaterial durch Abkühlen ausgehärtet ist. Die Spritzgussform 14 wird geöffnet und das fertige Spritzgussteil wird entnommen.

Die Spritzgussform 14 umfasst einen in den Formhohlraum 15 vorspringenden Formkern 17, durch den eine zylinderförmige Vertiefung in dem Spritzgussteil definiert wird. Für eine gute Struktur und Oberflächenqualität des Spritzgussteils im Bereich der zylinderförmigen Vertiefung soll der Abkühlvorgang in diesem Bereich gezielt gesteuert werden.

Der Formkern 17 umfasst dazu gemäß der vergrößerten Darstellung in Fig. 2 eine Verdampfungskammer 18, in der während des Abkühlvorgangs eine Flüssigkeit verdampft wird. In der Verdampfungskammer 18 stellt sich eine der Verdampfungstemperatur der Flüssigkeit entsprechende Temperatur ein, so dass das Abkühlen des Kunststoffmaterials in dem Formhohlraum 15 unter definierten Bedingungen erfolgt.

In dem Formkern 17 ist gemäß der vergrößerten Darstellung in Fig. 2 eine Zuleitung 19 ausgebildet, die sich als Kanal bis zu der Verdampfungskammer 18 erstreckt. In einem vorderen Abschnitt der Zuleitung 19 ist ein Kapillarröhrchen 20 angeordnet, dass einen Durchmesser von etwa 1 mm hat.

Eine Flüssigkeit, beispielsweise Wasser, wird unter hohem Druck durch die Zuleitung 19 und das Kapillarröhrchen 20 hindurch in die Verdampfungskammer 18 eingebracht. Der Druck in der Zuleitung 19 kann beispielsweise bei 15 bar liegen. Der Druck in der Zuleitung 19 kann, zwischen dem Übergang von der Zuleitung 19 in das Kapillarröhrchen 20 und der Mündung des Kapillarröhrchens 20 in der Verdampfungskammer 18, über dem Kapillarröhrchen 20 abfallen. Die Temperatur des Formkerns 17 ist höher als die Verdampfungstemperatur des Wassers, so dass das Wasser in der Verdampfungskammer 18 verdampft.

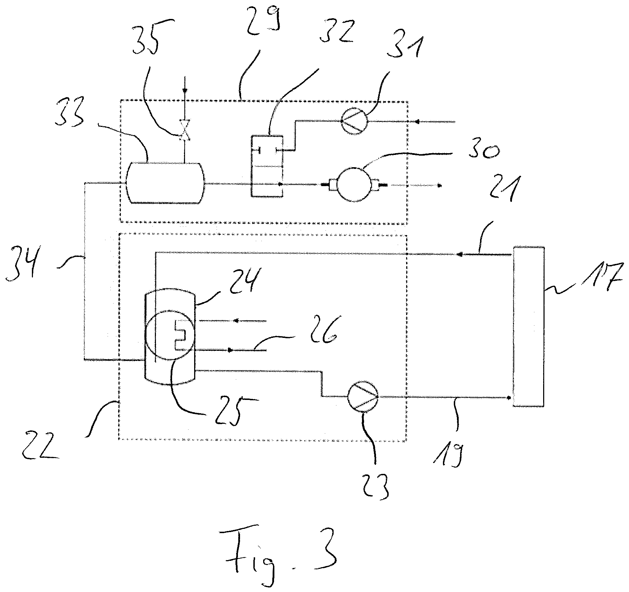

Die Zuleitung 19 ist gemäß Fig. 1 an eine Kühlvorrichtung 22 angeschlossen. Die Kühlvorrichtung 22 umfasst gemäß der schematischen Darstellung in Fig. 3 eine erste Pumpe 23, die dazu ausgelegt ist, das Wasser unter hohem Druck durch die Zuleitung 19 zu der Verdampfungskammer 18 zu pumpen. Durch eine Ableitung 21 werden der Dampf und Flüssigkeitsreste aus der Verdampfungskammer 18 abgeführt und zu der Kühlvorrichtung 22 zurückgeleitet.

In der Kühlvorrichtung 22 ist ein Kondensator 24 ausgebildet, in dem der Dampf wieder kondensiert wird. Über einen Wärmetauscher 25, der an einem Kaltwasser-Kreislauf 26 angeschlossen ist, wird die Kondensationswärme aus dem Kondensator 24 abgeführt. In einem unteren Abschnitt des Kondensators 24 sammelt sich das Wasser und kann von der Pumpe 23 erneut angesaugt werden.

An die Zuleitung 19 ist über eine Druckluftleitung 27 außerdem ein Kompressor 28 angeschlossen. Nach Abschluss eines Kühlvorgangs und wenn die Spritzgussform 14 geöffnet ist, wird ein Druckluftstoß durch die Zuleitung 19 geleitet, um den Dampf und Flüssigkeitsreste vollständig aus der Verdampfungskammer 18 zu verdrängen, so dass definierte Ausgangsbedingungen für den nächsten Abkühlvorgang vorliegen.

Liegt in der Verdampfungskammer 18 Atmosphärendruck an, so verdampft das Wasser bei 100 °C. Im vorliegenden Ausführungsbeispiel wird mit einer Werkzeugtemperatur von 90 °C gearbeitet, so dass durch ein Verdampfen bei 100 °C keine Kühlwirkung erzielt werden kann.

Die Kühlvorrichtung 22 der erfindungsgemäßen Spritzgussmaschine umfasst deswegen ein Druckmodul 29, das dazu ausgelegt ist, in der Verdampfungskammer 18 gezielt einem bestimmten Druck anzulegen, um die Verdampfungstemperatur zu beeinflussen. Dies kann in zwei Richtungen geschehen. Durch Reduzieren des Drucks in der Verdampfungskammer 18 kann die Verdampfungstemperatur reduziert werden. Durch eine reduzierte Verdampfungstemperatur kann der Kühlvorgang beschleunigt werden, was genutzt werden kann, um die Taktzeit beim Herstellen von Spritzgussteilen zu verkürzen. Durch Erhöhen des Drucks in der Verdampfungskammer 18 wird die Verdampfungstemperatur erhöht, wodurch der Abkühlvorgang des Kunststoffmaterials verlangsamt werden kann. Bei bestimmten Kunstmaterialien lässt sich dadurch die Oberflächenqualität verbessern.

Das Druckmodul 29 umfasst gemäß Fig. 3 eine Vakuumpumpe 30 und eine Überdruckpumpe 31, zwischen denen mit einem Umschalter 32 umgeschaltet werden kann. Die Vakuumpumpe 30 und die Überdruckpumpe 31 sind zweite Pumpen im Sinne der Erfindung. Mit den Pumpen 30, 31 kann ein von Atmosphärendruck abweichender Druck in einem Druckbehälter 33 angelegt werden. Um einen Druckausgleich mit Atmosphärendruck zu ermöglichen, ist der Druckbehälter 33 über ein Ventil 35 mit der Umgebung verbunden.

Der Druck aus dem Druckbehälter 33 überträgt sich durch eine Zwischenleitung 34, den Innenraum des Kondensators 24 sowie die Ableitung 21 bis in die Verdampfungskammer 18. Wird der Druckbehälter 33 mit der Vakuumpumpe 33 auf einen absoluten Druck von beispielsweise 200 mbar evakuiert, so liegt auch in der Verdampfungskammer 18 ein Druck von 200 mbar an. Das Wasser verdampft dann bereits bei einer Temperatur von 70 °C, so dass der Abkühlvorgang beschleunigt wird. Mit einem kürzeren Abkühlvorgang kann dazu beigetragen werden, die Taktzeit beim Herstellen von Spritzgussteilen zu verkürzen.

Wird mit der Überdruckpumpe 31 ein Überdruck in dem Druckbehälter 33 angelegt, so überträgt auch dieser sich in die Verdampfungskammer 18. Ein erhöhter Druck in der Verdampfungskammer 18 führt zu einer erhöhten Verdampfungstemperatur und damit zu einer Verlangsamung des Abkühlvorgangs. Durch einen langsameren Abkühlvorgang lässt sich bei bestimmten Kunststoffmaterialien eine verbesserte Oberflächenqualität des Spritzgussteils erreichen.

## Patentansprüche

1. Vorrichtung zum Kühlen einer Gussform (14), umfassend eine Gussform (14), in der ein Formhohlraum (15) ausgebildet ist, wobei in der Gussform (14) eine Verdampfungskammer (18) ausgebildet ist, mit einer ersten Pumpe (23), um eine Flüssigkeit zu der Verdampfungskammer (18) zuzuführen, und mit einer zweiten Pumpe (30, 31), um in der Verdampfungskammer (18) einen von Atmosphärendruck abweichenden Druck anzulegen, mit einer Zuleitung (19), die sich zu der Verdampfungskammer (18) erstreckt, wobei die Flüssigkeit in der Zuleitung (19) unter einen erhöhten Druck gesetzt wird, sodass die Flüssigkeit nicht in der Zuleitung (19) verdampft, wobei die erste Pumpe (23) dazu ausgelegt ist, die der Verdampfungskammer (18) zugeführte Flüssigkeit in der Zuleitung (19) unter einem Druck zu fördern, der um wenigstens 5 bar höher ist als der Druck in der Verdampfungskammer (18), und wobei ein zu der Verdampfungskammer (18) benachbarter Abschnitt der Zuleitung (19) eine lokale Verengung in der Zuleitung (19) bildet, wobei sich eine Ableitung von der Verdampfungskammer erstreckt, wobei die zweite Pumpe an die Ableitung angeschlossen ist und wobei die Vorrichtung dazu ausgebildet ist, dass der von der zweiten Pumpe aufgebaute Druck über die Ableitung oder über einen Abschnitt der Ableitung zu der Verdampfungskammer übertragen wird.

2. Vorrichtung nach Anspruch 1, **dadurch gekennzeichnet, dass** die Zuleitung (19) in dem die lokale Verengung bildenden, zu der Verdampfungskammer benachbarten Abschnitt (20) einen Durchmesser zwischen 0,5 mm und 2 mm, vorzugsweise zwischen 0,8 mm und 1,2 mm hat.

3. Vorrichtung nach einem der Ansprüche 1 oder 2, **dadurch gekennzeichnet, dass** die erste Pumpe dazu ausgelegt ist, die der Verdampfungskammer (18) zugeführte Flüssigkeit in der Zuleitung (19) unter einem Druck zu fördern, der um wenigstens 10 bar, weiter vorzugsweise um wenigstens 20 bar höher ist als der Druck in der Verdampfungskammer (18).

4. Vorrichtung nach einem der Ansprüche 1 bis 3, **dadurch gekennzeichnet, dass** die Ableitung (21) einen größeren Querschnitt hat als die Zuleitung (19).

5. Vorrichtung nach einem der Ansprüche 1 bis 4, **gekennzeichnet durch** einen Kondensator (24), um verdampfte Flüssigkeitsmengen aus der Verdampfungskammer (18) zu kondensieren.

6. Vorrichtung nach einem der Ansprüche 1 bis 5, **gekennzeichnet durch** einen Gasanschluss (27), um der Verdampfungskammer (18) ein Gas zuzuführen.

7. Vorrichtung nach einem der Ansprüche 1 bis 6, **dadurch gekennzeichnet, dass** die zweite Pumpe eine Vakuumpumpe (30) ist.

8. Vorrichtung nach einem der Ansprüche 1 bis 7, **dadurch gekennzeichnet, dass** die zweite Pumpe eine Überdruckpumpe (31) ist.

9. Kunststoff-Spritzgussmaschine mit einer Spritzgussform (14) und mit einer Vorrichtung zum Kühlen der Spritzgussform (14), wobei die Vorrichtung zum Kühlen nach einem der Ansprüche 1 bis 8, ausgebildet ist.

10. Verfahren zum Kühlen einer Gussform (14), bei dem in einer Gussform (14) ein Formhohlraum (15) augebildet ist, bei dem in der Gussform (14) eine Verdampfungskammer (18) ausgebildet ist, bei dem eine Flüssigkeit durch eine Zuleitung (19) zu der Verdampfungskammer (18) zugeführt wird, um die Flüssigkeit in der Verdampfungskammer (18) zu verdampfen, bei dem Reste der Flüssigkeit in verdampftem oder flüssigem Zustand über eine Ableitung (21) aus der Verdampfungskammer (18) abgeführt werden, und bei dem über eine zweite Pumpe ein durch die zweite Pumpe aufgebauter Druck über die Ableitung (21) oder einen Abschnitt der Ableitung (21) in der Verdampfungskammer (18) angelegt wird, wobei in der Verdampfungskammer ein von Atmosphärendruck abweichender Druck angelegt wird, wobei die Flüssigkeit in einer Zuleitung (19) zu der Verdampfungskammer (18) unter einen erhöhten Druck gesetzt wird, sodass die Flüssigkeit nicht in der Zuleitung (19) verdampft, wobei der Druck in der Zuleitung (19) um wenigstens 5 bar höher ist als der Druck in der Verdampfungskammer (18) und wobei ein zu der Verdampfungskammer (18) benachbarter Abschnitt der Zuleitung (19) eine lokale Verengung in der Zuleitung (19) bildet.

11. Verfahren zum Herstellen eines Kunststoff-Spritzgussteils, beim dem eine Spritzgussform (14) mit dem Verfahren nach Anspruch 10 gekühlt wird.

## Claims

1. Device for cooling a casting mould (14), comprising a casting mould (14), in which a mould cavity (15) is formed, wherein an evaporation chamber (18) is formed in the casting mould (14), having a first pump (23) for supplying a liquid to the evaporation chamber (18), and having a second pump (30, 31) for applying a pressure in the evaporation chamber (18) which differs from atmospheric pressure, having an inlet line (19) which extends to the evaporation chamber (18), wherein the liquid in the inlet line (19) is put under an increased pressure, with the result that the liquid does not evaporate in the inlet line (19), wherein the first pump (23) is designed to deliver the liquid supplied to the evaporation chamber (18) in the inlet line (19) at a pressure which is at least 5 bar higher than the pressure in the evaporation chamber (18), and wherein a section of the inlet line (19) which is adjacent to the evaporation chamber (18) forms a local constriction in the inlet line (19), wherein an outlet line extends from the evaporation chamber, wherein the second pump is connected to the outlet line and wherein the device is designed such that the pressure built up by the second pump is transferred to the evaporation chamber via the outlet line or via a section of the outlet line.

2. Device according to Claim 1, **characterized in that** the inlet line (19) has a diameter of between 0.5 mm and 2 mm, preferably between 0.8 mm and 1.2 mm, in the section (20) forming the local constriction and adjacent to the evaporation chamber.

3. Device according to either of Claims 1 or 2, **characterized in that** the first pump is designed to deliver the liquid fed to the evaporation chamber (18) in the inlet line (19) at a pressure which is higher than the pressure in the evaporation chamber (18) by at least 10 bar, as a further preference by at least 20 bar.

4. Device according to any of Claims 1 to 3, **characterized in that** the outlet line (21) has a larger cross section than the inlet line (19).

5. Device according to any of Claims 1 to 4, **characterized by** a condenser (24) for condensing evaporated liquid quantities from the evaporation chamber (18).

6. Device according to any of Claims 1 to 5, **characterized by** a gas connection (27) for supplying a gas to the evaporation chamber (18).

7. Device according to any of Claims 1 to 6, **characterized in that** the second pump is a vacuum pump (30).

8. Device according to any of Claims 1 to 7, **characterized in that** the second pump is an excess pressure pump (31).

9. Plastics injection moulding machine having an injection mould (14) and having a device for cooling the injection mould (14), wherein the device for cooling is designed according to any of Claims 1 to 8.

10. Method for cooling a casting mould (14), in which a mould cavity (15) is formed in a casting mould (14), in which an evaporation chamber (18) is formed in the casting mould (14), in which a liquid is supplied to the evaporation chamber (18) through an inlet line (19) in order to evaporate the liquid in the evaporation chamber (18), in which residues of the liquid are discharged from the evaporation chamber (18) in the evaporated or the liquid state via an outlet line (21), and in which a pressure built up by a second pump is applied via the second pump in the evaporation chamber (18) via the outlet line (21) or a section of the outlet line (21), wherein a pressure which differs from atmospheric pressure is applied in the evaporation chamber, wherein the liquid in an inlet line (19) leading to the evaporation chamber (18) is put under an increased pressure, with the result that the liquid does not evaporate in the inlet line (19), wherein the pressure in the inlet line (19) is at least 5 bar higher than the pressure in the evaporation chamber (18) and wherein a section of the inlet line (19) which is adjacent to the evaporation chamber (18) forms a local constriction in the inlet line (19).

11. Method for producing a plastics injection mould component in which an injection mould (14) is cooled by the method according to Claim 10.

## Revendications

1. Dispositif de refroidissement d'un moule (14), comprenant un moule (14) dans lequel est formée une cavité de moule (15), une chambre d'évaporation (18) étant ménagée dans le moule (14), avec une première pompe (23), pour amener un liquide à la chambre d'évaporation (18), et avec une deuxième pompe (30, 31), pour appliquer une pression différente de la pression atmosphérique dans la chambre d'évaporation (18), avec une conduite d'alimentation (19) qui s'étend jusqu'à la chambre d'évaporation (18), le liquide dans la conduite d'alimentation (19) étant mis sous une pression accrue de sorte que le liquide ne s'évapore pas dans la conduite d'alimentation (19), la première pompe (23) étant conçue de telle sorte que le liquide amené à la chambre d'évaporation (18) soit, dans la conduite d'alimentation (19), mis sous une pression qui est supérieure d'au moins 5 bars à la pression dans la chambre d'évaporation (18), et une section de la conduite d'alimentation (19) adjacente à la chambre d'évaporation (18) formant un rétrécissement local dans la conduite d'alimentation (19), une dérivation s'étendant depuis la chambre d'évaporation, la deuxième pompe étant raccordée à la dérivation, et le dispositif étant conçu de telle sorte que la pression établie par la deuxième pompe soit transmise à la chambre d'évaporation via la dérivation ou via une partie de la dérivation.

2. Dispositif selon la revendication 1, **caractérisé en ce que** la conduite d'alimentation (19) a un diamètre compris entre 0,5 mm et 2 mm, de préférence entre 0,8 mm et 1,2 mm, dans la partie (20) formant le rétrécissement local et adjacente à la chambre d'évaporation.

3. Dispositif selon l'une des revendications 1 ou 2, **caractérisé en ce que** la première pompe est adaptée pour refouler le liquide alimentant la chambre d'évaporation (18) dans la conduite d'alimentation (19) sous une pression supérieure d'au moins 10 bars, de préférence d'au moins 20 bars, à la pression régnant dans la chambre d'évaporation (18).

4. Dispositif selon l'une des revendications 1 à 3, **caractérisé en ce que** la conduite d'évacuation (21) a une section transversale plus grande que la conduite d'alimentation (19).

5. Dispositif selon l'une des revendications 1 à 4, **caractérisé par** un condenseur (24) pour condenser les quantités de liquide évaporées provenant de la chambre d'évaporation (18).

6. Dispositif selon l'une des revendications 1 à 5, **caractérisé par** un raccord de gaz (27) pour amener un gaz à la chambre d'évaporation (18).

7. Dispositif selon l'une des revendications 1 à 6, **caractérisé en ce que** la deuxième pompe est une pompe à vide (30).

8. Dispositif selon l'une des revendications 1 à 7, **caractérisé en ce que** la deuxième pompe est une pompe de surpression (31).

9. Machine de moulage par injection de matière plastique, comprenant un moule à injection (14) et un dispositif de refroidissement du moule à injection (14), le dispositif de refroidissement étant conçu selon l'une des revendications 1 à 8.

10. Procédé de refroidissement d'un moule (14), dans lequel une cavité de moule (15) est formée dans un moule (14), une chambre d'évaporation (18) est formée dans le moule (14), un liquide est amené à la chambre d'évaporation (18) par une conduite d'alimentation (19) afin d'évaporer le liquide dans la chambre d'évaporation (18), des restes du liquide à l'état évaporé ou liquide étant évacués de la chambre d'évaporation (18) par l'intermédiaire d'une conduite d'évacuation (21), et une pression établie par une deuxième pompe étant appliquée dans la chambre d'évaporation (18) par la deuxième pompe par l'intermédiaire de la conduite d'évacuation (21) ou d'une partie de la conduite d'évacuation (21), une pression différente de la pression atmosphérique étant appliquée dans la chambre d'évaporation, le liquide étant mis sous une pression accrue dans une conduite d'alimentation (19) vers la chambre d'évaporation (18), de sorte que le liquide ne s'évapore pas dans la conduite d'alimentation (19), la pression dans la conduite d'alimentation (19) étant supérieure d'au moins 5 bars à la pression régnant dans la chambre d'évaporation (18) et une partie de la conduite d'alimentation (19) voisine de la chambre d'évaporation (18) formant un rétrécissement local dans la conduite d'alimentation (19).

11. Procédé de fabrication d'une pièce en matière plastique moulée par injection, dans lequel un moule d'injection (14) est refroidi par le procédé selon la revendication 10.
